# EUROPÄISCHE PATENTSCHRIFT

(11) **EP 2 554 504 B1**
(45) Veröffentlichungstag und Bekanntmachung des Hinweises auf die Patenterteilung: **26.11.2014**
(21) Anmeldenummer: 12178386.4
(22) Anmeldetag: 27.07.2012
(51) Int. Cl.: B65H 21/00, B29C 65/00, D04H 1/48, D04H 1/49, D04H 3/11

(54) **Verbindung von Vliesmaterialien**
Splicing of non-woven materials
Raccordement de matières non-tissées

(30) Priorität: 30.07.2011 DE 202011103915 U
(43) Veröffentlichungstag der Anmeldung: 06.02.2013
(73) Patentinhaber: Norafin Industries (Germany) GmbH, 09456 Mildenau (DE)
(72) Erfinder: Jolly, Marc, 09456 Annaberg-Buchholz (DE); Groschopp, Michael, 09427 Ehrenfriedersdorf (DE); Lang, Andre, 09465 Sehmatal-Cranzahl (DE); Fischer, Roland, 01454 Radeberg (DE)
(74) Vertreter: Szynka, Dirk

(56) Entgegenhaltungen:
- WO-A1-2011/114254
- DE-U1-202009 007 662
- US-A1- 2011 133 016

## Beschreibung

Das technische Gebiet der Erfindung betrifft eine Technologie zum Verbinden von Vliesmaterialien.

In der Regel werden für die Ausrüstung und/oder Weiterverarbeitung von Viiesmaterialien große Flächen (Lauflängen) benötigt, die anwendungsbedingt keine Verbindungsstellen aufweisen dürfen, deren Materialeigenschaften sich von denen in der Grundware unterscheiden. Große Warenlängen in einem Stück fehlerfrei zu produzieren ist u. U. schwierig. Prozessbedingt ergibt sich daraus die Notwendigkeit der Verbindung von Vliesrollen bzw. -stücken.

Werden einzelne Vliesstücke mit Näh- bzw. Klebtechnologien verbunden, so entsteht an der Verbindungstelle ein Bereich, der im Vergleich zu den zu verbindenden Vliesstücken meist starke Änderungen in den Vlieseigenschaften (z. B. Flächenmasse, Dicke, Netzverhalten, Reißfestigkeit, Dehnungsverhalten, Eintrag von Fremdsubstrat u. ä.) aufweist.

Der Stand der Technik auf dem Gebiet des Zusammenfügens von Vliesteilstücken ist **dadurch gekennzeichnet, dass** das auslaufende Textilbahnende mittels Klebestreifen an die folgende Teilbahn geklebt wird (US 000003858819A, US 000004157934A, JP 000062167160A, GB 000001006570A). Dadurch entstehen Überlappungsbereiche, die wesentlich andere Eigenschaften (Materialdicke, Flächengewicht, Reißfestigkeit, Eintrag von Fremdsubstrat u. a.) haben, als das Rollenmaterial. Das gleiche gilt, wenn die beiden Vliesstücken Stoß-an-Stoß mittels Klebstoff bzw. Klebefolie aneinander fixiert werden. Eine weitere Möglichkeit besteht darin, die zu verbindenden Vliesenden zu vernähen. Dies bedingt aber wiederum entweder eine Überlappung der Vliesmaterialien und damit eine Unstetigkeit bezüglich der Vlieseigenschaften oder aber die beiden Vliesstücke werden stoßgenau vernäht, was in beiden Fällen zu Eintrag von Fremdsubstrat in Form von fadenförmigem Material führt.

Die DE 20 2009 007 662 U1 beschreibt ein Verfahren zur Herstellung eines Textilträgermaterials durch Verbinden zweier Rohbahnen durch Verschweißen, wobei die entstehende Schweißnaht zusätzlich mit einem Klebestreifen abgedeckt wird. Das Textilträgermaterial kann dann beispielsweise mit einer Klebeschicht versehen zu einem Klebeband weiterverarbeitet werden.

Die WO 2011/114254 A1 betrifft ein Verfahren zum Verbinden von Bahnmaterial, wobei die Stoßenden vernäht werden.

Es besteht deshalb die Aufgabe, ein Verfahren zu entwickeln, das jeweils zwei oder mehrere Vliesteilstücke zu einer Gesamtheit miteinander verbindet, wobei die Ware auch in dem Verbindungsbereich die Mindestanforderungen an das Grundmaterial erfüllt und im Idealfall die Verbindungsstelle nicht mehr visuell vom Grundmaterial zu unterscheiden ist.

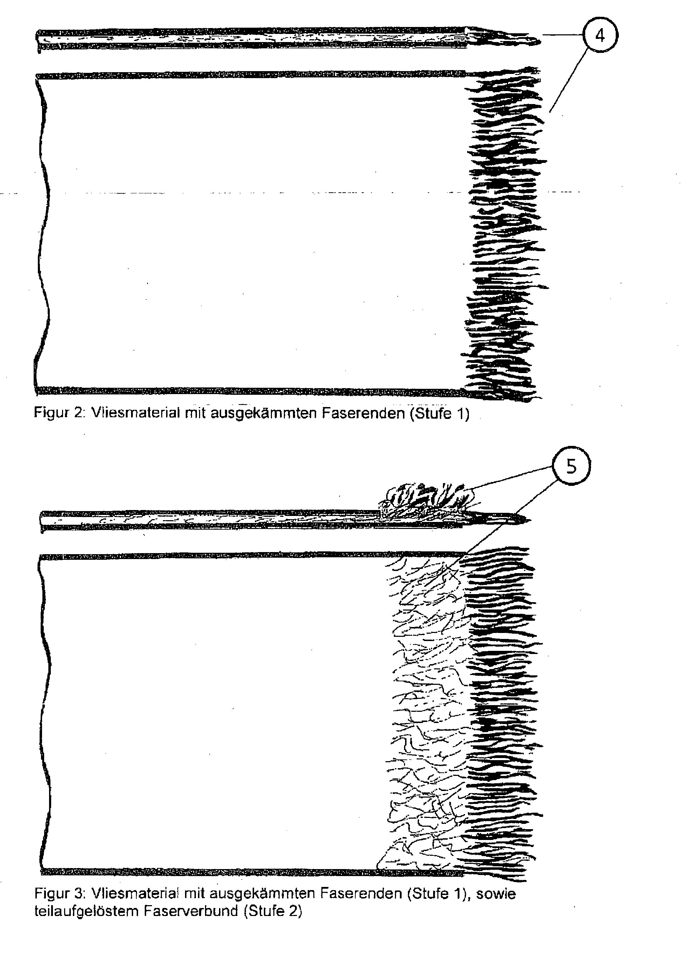

Erfindungsgemäß wird dieses Problem durch ein Verfahren entsprechend dem Patentanspruch 1 gelöst, wobei den folgenden zweistufigen Prozess realisiert ist:
1. Vorbereitungsprozedur für das Hydro-Splicing
   Das Rollenmaterial wird kantengerade bzw. nach Erfordernis auch schräg zum Warenlauf, zum Beispiel unter einem Winkel von mindestens 20° und höchstens 160°, frei von Spannungsschwankungen mittels Wickler aufgerollt. Kurz vor Bahnende wird die äußere Lage auf der neu gewickelten Rolle durch eine Sperrrolle fixiert, so dass die Warenspannung auf der frisch gewickelten Rolle erhalten bleibt. Die freie Wickelachse wird mit einer weiteren Teilrolle bestückt und das Materialende der ersten Rolle sowie der Materialanfang der zweiten Rolle über die Abwickelposition hinaus aus der Maschine geführt. Hier werden beide Enden in geeigneter Weise miteinander verbunden.
2. Hauptverfahren Hydro-Splicing und Nachbereitung
   Für den eigentlichen Splice-Prozess sind beide Vliesenden seitenverkehrt in ihrem Flächenverbund quer zur Maschinenlaufrichtung auf den letzten ca. 10 mm vom Bahnende bis zur Einzelfaser auszukämmen (fachlich auch: aufzulösen) und auf den sich anschließenden ca. 10-50 mm anteilig aufzulösen (vgl. Fig. 3). Dieses Prozedur ist sehr sorgfältig (z. Z. noch manuell) und gleichmäßig auszuführen. Es sind allerdings auch maschinelle Einrichtungen, die eine größere Gleichmäßigkeit, Präzision und damit Reproduzierbarkeit erwarten lassen, denkbar.

Das Auskämmen bis auf die Einzelfaser erfolgt also in einem Endbereich des jeweiligen Vlieses, der sich beispielsweise mindestens über in dieser Reihenfolge zunehmend bevorzugt die letzten 10 mm, 12 mm, 14 mm, 16 mm des Vliesendes erstreckt; von dieser Untergrenze unabhängige Obergrenzen liegen in dieser Reihenfolge zunehmend bevorzugt etwa bei 50 mm, 45 mm, 40 mm, 35 mm, 30 mm, 25 mm. Besonders bevorzugt werden die letzten 20 mm bis auf die Einzelfaser ausgekämmt.

Der sich daran anschließende Bereich, in dem anteilig ausgekämmt / aufgelöst wird, kann sich zum Beispiel über in dieser Reihenfolge zunehmend bevorzugt mindestens 10 mm, 15 mm, 20 mm, 25 mm, 30 mm, 35 mm erstrecken; von dieser Untergrenze unabhängige Obergrenzen liegen in dieser Reihenfolge zunehmend bevorzugt etwa bei 50 mm, 48 mm, 46 mm, 44 mm, 42 mm erstrecken. Besonders bevorzugt sind 40 mm.

Danach werden beide zu kombinierenden Enden überlappend zueinander in einer Vorrichtung derart fixiert, dass die jeweils anteilig aufgelöste Vliesposition mit der bis auf die Einzelfasern aufgelösten Position des anderen Vliesendes in Deckung gebracht ist. Diese Vorrichtung wird in einen Rahmen eingespannt, so dass im Wesentlichen nur der zu verfestigende Materialstreifen offen liegt.

Im nächsten Schritt wird die Verbindungsstelle im Rahmen mit den beiden ausgekämmten und in geeigneter Weise fixierten Vliesenden mittels Wasserstrahlverfahren behandelt, wobei des Wasser aus dem Material nach unten abgeführt wird. Dabei werden die Faserenden der Verbindungsstelle mittels einer oberhalb und/oder unterhalb beweglichen (fahrbaren) Wasserstrahldüsenleiste über den Materialquerschnitt verlegt und damit der Materialverbund verfestigt. Dieser Verfahrensschritt wird mit ggf. zu variierendem Düsendruck wechselseitig mehrfach durchgeführt.

Danach wird die Materiallose rückwärts auf den Abwickler zurück gewickelt, die Sperrrolle gelöst und der Wickelvorgang regulär fortgesetzt.

Die überlappend angeordneten und vorzugsweise erfindungsgemäß ausgekämmten Vliesenden können zusätzlich zu dem Verbinden mittels Wasserstrahl- bzw. Nadeltechnologie auch unter Ultraschalleinwirkung verbunden werden; dies soll auch unabhängig von den Merkmalen des Hauptanspruchs offenbart sein, also unabhängig von dem Verbinden mittels Wasserstrahl- bzw. Nadeltechnologie.

### Ausführungsbeispiel

### Schritt 1:

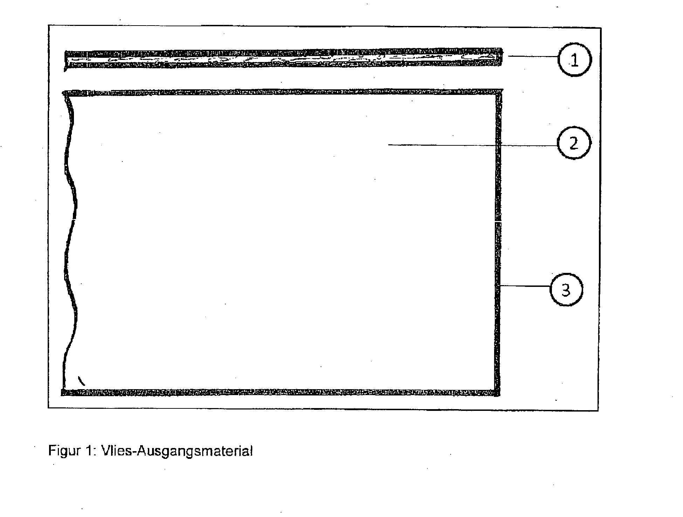

Als Vorlage für den Splice-Prozess dienen mindestens zwei wasserstahlverfestigte bzw. vernadelte Vliesstoffbahnen (vgl. Fig. 1).

Fig. 2 zeigt ein für den Splice-Prozess vorbereitetes Warenmuster. Mittels Drahtbürstenrolle wurden hier stirnseitig Fasern ausgekämmt, so dass in diesem Randbereich lediglich vereinzelte Faserenden in Warenlaufrichtung herausragen (Stufe 1).

In Stufe 2 (vgl. Fig. 3) wird der Faserverbund nur leicht bearbeitet und somit das Warenmasse in diesem Bereich durch Herausarbeiten einzelner Fasern nur geringfügig reduziert.

### Schritt 2

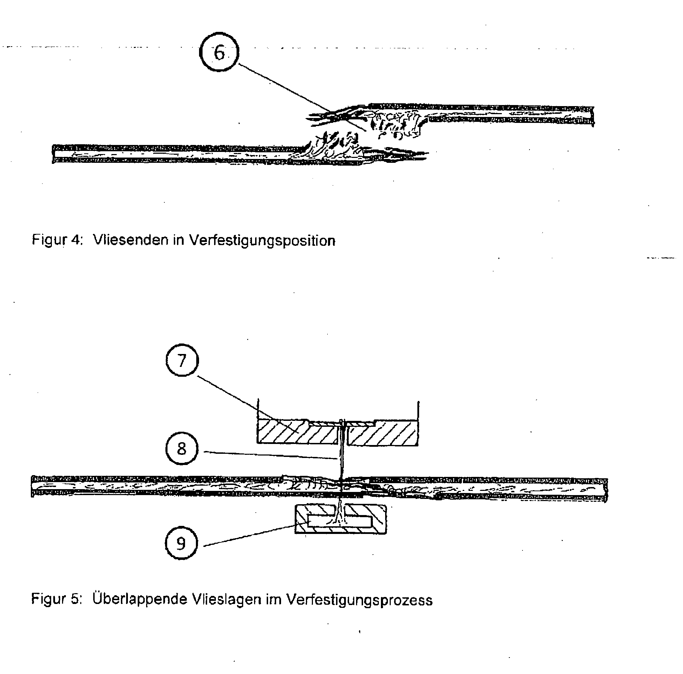

Zwei derart vorbereitete Vliesenden werden jeweils mit der bearbeiteten Seite aufeinander gelegt, dass jeweils Stufe 1 des einen Endes mit der Stufe 2 des gegenüberliegenden in Deckung gebracht wird (vgl. Fig. 4). Die Flächenmasse der Stufen 1 und 2 kann in der Summe beispielsweise der Flächenmasse des Grundmaterials der beiden Vliesmaterialen sehr nahe kommen bzw. im Idealfall gleich dieser sein.

### Schritt 3:

Fig. 5 zeigt die Anordnung der zu verfestigenden Vliesenden zueinander. Sie werden in einem Rahmen zur weiteren Bearbeitung fixiert. Oberhalb der Materialbahnen befindet sich ein beweglicher Düsenleistenkopf (7), der in definierter Abfolge warenseitig abwechselnd rechts und links über die Vliesbahnen hinweg gefahren wird und diese sukzessive miteinander verfestigt, indem mit schrittweise steigendem Düsendruck die losen Faserenden über den Materialquerschnitt eingebunden werden. Auf der gegenüber liegenden Warenseite führt eine Vakuumabsaugvorrichtung das überschüssige Wasser ab (9).

Der Düsenleistenkopf (7) wird abwechselnd von rechts nach links und umgekehrt, auch abhängig von der vorliegenden Art und Flächenmasse des Vlieses, über die Vliesbahnen hinweg gefahren, zum Beispiel mindestens 1-, 5-, 10-mal und davon unabhängig etwa höchstens 40-, 35-, 30-mal. Der Wasserdruck, auch der schrittweise erhöhte Wasserdruck, kann etwa in dieser Reihenfolge zunehmend bevorzugt bei mindestens 10 bar, 20 bar, 30 bar, 40 bar, 50 bar liegen; von dieser Untergrenze unabhängige Obergrenzen liegen zum Beispiel bei in dieser Reihenfolge zunehmend bevorzugt 300 bar, 250 bar, 200 bar, 150 bar, 120 bar. Der Düsenleistenkopf (7) kann eine oder mehrere Düsenleisten umfassen; die Löcher in den Düsenleisten können in Reihe, parallel oder versetzt zueinander angeordnet sein.

### Bezugszeichenliste

- 1: Vliesmaterial im Querschnitt
- 2: Vlies-Grundmaterial (Draufsicht)
- 3: Schnittkante quer zur Warenlaufrichtung
- 4: ausgekämmte Vliesenden (Stufe 1)
- 5: teilaufgelöster Faserverbund (Stufe 2)
- 6: vorbereitete Vliesbahnenden zueinander in Deckung gebracht.
- 7: Wasserstrahldüse
- 8: Wasserstrahlen
- 9: Absaugeinheit (Vakuum)

## Patentansprüche

1. Verfahren zum Verbinden von Vliesmaterialien(1, 2), **dadurch gekennzeichnet, dass**
durch Ausdünnen, insbesondere chemische Faserauslösung, oder Auskämmen der Vliesendbereiche (4) an der Verbindungsstelle,
Einspannen der überlappend angeordneten Vliese und
anschließende Nadelverfestigung oder Strahlverfestigung mit Wasser (8) oder alternativen Medien
eine Verbindungsstelle der Vliesstücke realisiert wird, die annähernd gleiche Eigenschaften im Vergleich zum Grundmaterial aufweist.

2. Verfahren nach Anspruch 1, **dadurch gekennzeichnet, dass** die Endbereiche (4) der Vliesstücke ein- oder mehrstufig ausgekämmt werden und somit je nach Materialart bzw. Dicke verschieden breite Verbindungsstellen resultieren.

3. Verfahren nach einem der vorstehenden Ansprüche, **dadurch gekennzeichnet, dass** das Auskämmen manuell erfolgt.

4. Verfahren nach Anspruch 1 oder 2, **dadurch gekennzeichnet, dass** das Auskämmen maschinell erfolgt.

5. Verfahren nach einem der vorstehenden Ansprüche, **dadurch gekennzeichnet, dass** die Vliesteilstücke aus Stapelfasern jeglicher Substrate, sowie Substratmischungen bestehen.

6. Verfahren nach einem der vorstehenden Ansprüche, **dadurch gekennzeichnet, dass** die Vliesteilstücke organischer Natur, z. B. Kunstfasern, etwa Polyester, Polyacrylnitril, Aramide oder Naturfasern, etwa Viskose, Baumwolle, Flachs, oder anorganischer Natur, etwa auf Silikatbasis oder auf Basaltbasis oder Glasfaser, sind.

7. Verfahren nach einem der vorstehenden Ansprüche, **dadurch gekennzeichnet, dass** unterschiedliche Wasserstrahldrücke realisiert werden können.

8. Verfahren nach einem der vorstehenden Ansprüche, **dadurch gekennzeichnet, dass** Wasser (8) zur Strahlverfestigung eingesetzt wird.

9. Verfahren nach einem der vorstehenden Ansprüche, wobei ein Auskämmen bis auf die Einzelfaser in einem Endbereich des jeweiligen Vlieses erfolgt, der sich über mindestens 10 mm und höchstens 50 mm erstreckt.

10. Verfahren nach einem der vorstehenden Ansprüche, wobei ein Auskämmen bis auf die Einzelfaser in einem Endbereich des jeweiligen Vlieses erfolgt und in einem daran anschließenden Bereich (5) anteilig ausgekämmt wird, welcher daran anschließende Bereich (5) sich über mindestens 10 mm und höchstens 50 mm erstreckt.

11. Verfahren nach einem der vorstehenden Ansprüche, wobei ein Wasserstrahldruck mindestens 10 bar und höchstens 300 bar beträgt.

12. Verfahren nach einem der vorstehenden Ansprüche, wobei die überlappend angeordneten Vliese durch eine Ultraschallbehandlung verbunden werden.

## Claims

1. A method of bonding nonwoven materials (1,2) **characterized in that**
by thinning, in particular chemical unraveling, or combing-out nonwoven material ends (4) at the bonding area,
by fixing said nonwoven material end in an overlapping manner, and
by subsequent needle-punching or fluid entanglement with water (8) or other media
a bonding area of nonwoven material pieces is realized, which shows almost the same properties in comparison to a non-bonding area.

2. The method according to claim 1, **characterized in that** said ends (4) of said nonwoven material pieces are combed-out in a one-stage or a multi-stage process which results in bonding-areas having a different width, depending on the type of material or its thickness.

3. The method according to one of the preceding claims, **characterized in that** said combing-out is performed manually.

4. The method according to claim 1 or 2, **characterized in that** said combing-out is performed by machine.

5. The method according to one of the preceding claims, **characterized in that** said nonwoven material pieces consist of staple fibers of any material or material blends.

6. The method according to one of the preceding claims, **characterized in that** said nonwoven material pieces are organic, for instance synthetic fibers such as polyester, polyacrylonitrile, aramid, or natural fibers, for instance viscose, cotton, flax, or inorganic, for instance based on silicate or on basalt or glass fibers.

7. The method according to one of the preceding claims, **characterized in that** different water-jet pressures can be applied.

8. The method according to one of the preceding claims, **characterized in that** water (8) is applied for said fluid entanglement.

9. The method according to one of the preceding claims, wherein a combing-out until obtaining individual fibers is performed in an end region of the respective nonwoven material, which extends over 10 mm at minimum and 50 mm at maximum.

10. The method according to one of the preceding claims, wherein a combing-out until obtaining individual fibers is performed in an end region of the respective nonwoven material, wherein in a region (5) adjacent thereto combing-out is performed partly, which region (5) adjacent thereto extends over 10 mm at minimum and 50 mm at manimum.

11. The method according to one of the preceding claims, wherein a water-jet pressure is 10 bar at minimum and 300 bar at maximum.

12. The method according to one of the preceding claims, wherein said nonwoven materials provided in an overlapping manner are bonded by an ultrasonic treatment.

## Revendications

1. Procédé de liaison de matériaux non tissés (1, 2), **caractérisé en ce que**
par désépaississement, notamment par effilochage chimique, ou par peignage des zones terminales (4) du non-tissé au niveau de la zone de liaison,
pressage des non-tissés disposés en chevauchement, et
réalisation subséquente d'un aiguilletage ou d'une consolidation par jets d'eau (8) ou d'autres substances
il est réalisé une zone de liaison des pièces de non-tissé qui présente des propriétés quasiment identiques à celles du matériau initial.

2. Procédé selon la revendication 1, **caractérisé en ce que** les zones terminales (4) des pièces de non-tissé sont peignées en une fois ou en plusieurs fois pour produire, selon le type de matériau ou selon son épaisseur, des zones de liaison de différentes épaisseurs.

3. Procédé selon l'une des revendications précédentes, **caractérisé en ce que** le peignage est réalisé manuellement.

4. Procédé selon la revendication 1 ou 2, **caractérisé en ce que** le peignage est réalisé mécaniquement.

5. Procédé selon l'une des revendications précédentes, **caractérisé en ce que** les pièces partielles de non-tissé se composent de fibres discontinues de tout type de substrat et de mélanges de substrats.

6. Procédé selon l'une des revendications précédentes, **caractérisé en ce que** les pièces partielles de non-tissé sont de nature organique, par exemple en fibres synthétiques telles que le polyester, le polyacrylonitrile, l'aramide, ou en fibres naturelles telles que la viscose, le coton, le lin, ou de nature inorganique comme à base de silicate ou de basalte ou en fibres de verre.

7. Procédé selon l'une des revendications précédentes, **caractérisé en ce que** des pressions de jet d'eau différentes peuvent être mises en oeuvre.

8. Procédé selon l'une des revendications précédentes, **caractérisé en ce que** l'on emploie de l'eau (8) pour la consolidation par jets.

9. Procédé selon l'une des revendications précédentes, dans lequel on procède à un peignage jusqu'à la fibre individuelle dans une zone terminale du non-tissé respectif, laquelle s'étend sur au moins 10 mm sans dépasser 50 mm.

10. Procédé selon l'une des revendications précédentes, dans lequel on procède à un peignage jusqu'à la fibre individuelle dans une zone terminale du non-tissé respectif et à un peignage partiel dans une zone (5) contiguë à celle-ci, laquelle zone (5) contiguë à celle-ci s'étend sur au moins 10 mm sans dépasser 50 mm.

11. Procédé selon l'une des revendications précédentes, dans lequel une pression de jet d'eau fait au moins 10 bars sans dépasser 300 bars.

12. Procédé selon l'une des revendications précédentes, dans lequel les non-tissés disposés en chevauchement sont liés par un traitement aux ultrasons.
